# EUROPEAN PATENT SPECIFICATION

(11) **EP 1 614 605 B1**
(45) Date of publication and mention of the grant of the patent: **27.12.2006**
(21) Application number: 04015859.4
(22) Date of filing: 06.07.2004
(51) Int. Cl.: B62B 7/06

(54) **Locking mechanism for frame unit**
Schliessmechanismus für Rahmen
Mécanisme de fermeture pour cadre

(43) Date of publication of application: 11.01.2006
(73) Proprietor: Adora Business Company Limited, Tortola (VG)
(72) Inventor: Chen, Jui-Lung, Kushan District Kaohsiung (TW)
(74) Representative: Banzer, Hans-Jörg

(56) References cited:
- EP-A- 1 232 927
- WO-A-02/085682
- DE-U- 20 010 365

## Description

### Field of the Invention

The present invention relates generally to a locking mechanism for a frame unit, and more particularly to a locking mechanism which is adapted, but not limited, in a stroller, and which enables a frame unit to be folded or to be held at a stretched state easier.

### Background of the Invention

As shown in Fig. 1, the locking mechanism according to the preamble of claim 1 is disclosed in European Patent No. 1,232,927 A2 and has a lever 9a at an upper end pivotally connected to an oblong portion 8b, and a tooth 9b of the lever 9a at a lower end is engaged into a recess 85 of a cursor 5k to maintain the frames of a stroller having an umbrella at a stretched state. When it is desired to fold the stroller having an umbrella, the lever 9a is upwardly pivoted to make the tooth 9b escape from the recess 85 so that the cursor 5k is movable and the frame can be folded.

However, for the reason that the oblong portion 8b which is pivotally connected with upper bars 6a' and 6b' can not be moved up and down, once a button 9c is accommodated in a notch 8c, it is difficult to release the engagement between the button 9c and the notch 8c. Therefore, the lever 9a is difficult to be pivoted again and thus the cursor 5k is also difficult to be separated from the tooth 9b so as to fold the frames.

### Summary of the Invention

Accordingly, the present invention relates to a locking mechanism for a frame unit that can substantially obviate one or more of the problems due to the limitations and disadvantages of the related arts.

One object of the present invention is the provision of a locking mechanism which enables the frame unit to be folded or stretched easier.

Another object of the present invention is the provision of a stroller having a locking mechanism which enables the frame unit to be folded or stretched easier.

Additional features and advantages of the invention will be set forth in the description which follows, and in portion will be apparent from the description, or may be learned by practice of the invention. The objectives and advantages of the invention will be realized and attained by the structure particularly pointed out in the written description and claims hereof as well as the appended drawings.

These objects are achieved by a locking mechanism as defined by claim 1 and a stroller comprising such a locking mechanism as defined by claim 17. The dependent claims defined preferred or advantageous embodiments of the locking mechanism.

To achieve these and other advantages and according to the purpose of the present invention, as embodied and broadly described, a locking mechanism for a frame unit, provided for connecting to the frame unit which has at least a first rod and at least a second rod, the locking mechanism comprises: a base, a slide, a pivoting member, a locking member, and a releasing member, and characterized by: the base being pivotally connected with the at least the first rod of the frame unit; the slide being pivotally connected with the at least the second rod of the frame unit; the pivoting member being pivotally connected with the base; the locking member having opposite two ends, one end being mounted to the pivoting member, another end being engaged to the slide so as to keep the slide adjacent to the base and to hold the at least the first rod and the at least the second rod of the frame unit at a stretched state; the releasing member being mounted to the base; wherein when a force is exerted on the releasing member, the releasing member actuates the locking member to separate the locking member from the slide in order to allow the slide moving relative to the base, which make the frame unit in a foldable state.

It is preferred that the locking mechanism further has an elastic member situated between the pivoting member and the locking member for recovering the locking member.

It is preferred that the base further has a lug for guiding movement of the releasing member.

It is preferred that the releasing member further has a slant for abutting against a slope of the locking member to actuate the locking member.

It is preferred that the releasing member has at least an elastic arm portion and the base has at least an inclined surface contacting with the at least the elastic arm portion to recover the releasing member.

It is preferred that the base has at least a slot for accommodating the at least the first rod.

It is preferred that the slide has at least a flute for accommodating the at least the second rod.

It is preferred that the pivoting member further has a protuberance for abutting against the releasing member to limit the pivoting member from moving.

It is preferred that the locking mechanism further has a handle pivotally connected to the pivoting member for auxiliary folding the frame unit.

It is preferred that the locking member further has a camber for the slide to be easily recovered.

It is preferred that the frame unit further has a guiding rod connected to the base to guide the motion of the slide.

It is preferred that the base has a slit for accommodating the guiding rod.
It is preferred that the slide has a tunnel for accommodating the guiding rod.

It is preferred that the frame unit further comprises a pedal assembly provided at one end of the guiding rod to facilitate stretching of the frame unit.

It is preferred that the frame unit further comprises at least a third rod to connect the guiding rod and the at least the second rod.

It is preferred that the frame unit further comprises a strut assembly connecting the at least the first rod and the at least the second rod.

It is preferred that a stroller comprises a locking mechanism described as above.
It is to be understood that both the forgoing general description and the following detailed description are exemplary and explanatory and are intended to provide further explanation of the invention as claimed.

### Brief Description of the Drawings

The accompanying drawings, which are included to provide a further understanding of the invention and are incorporated in and constitute a portion of the specification, illustrate embodiments of the invention and together with the description serve to explain the principle of the invention. In the drawings:

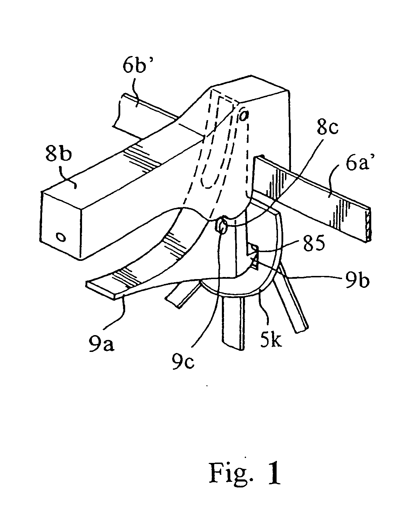

Fig. 1 is schematic view illustrating a conventional locking mechanism;
Fig. 2 is an assembled perspective view of the locking mechanism and the frame unit according to the present invention, illustrating the frame unit is locked at a stretched state by the locking mechanism;
Fig. 3 is a partially sectional view taken from the Fig. 2;
Fig. 4 is a perspective view illustrating the base of the locking mechanism according to the present invention;
Fig. 5 is a perspective view illustrating the slide of the locking mechanism according to the present invention;
Fig. 6 is a perspective view illustrating the pivoting member of the locking mechanism according to the present invention;
Fig. 7 is a perspective view illustrating the locking member of the locking mechanism according to the present invention;
Fig. 8 is a perspective view illustrating the releasing member of the locking mechanism according to the present invention;
Fig. 9 is an assembled perspective view of the locking mechanism and the frame unit according to the present invention, illustrating the locking mechanism is released so that the frame unit is at a foldable state; and
Fig. 10 is a partially sectional view taken from the Fig. 9.

### Detailed Description of the Invention

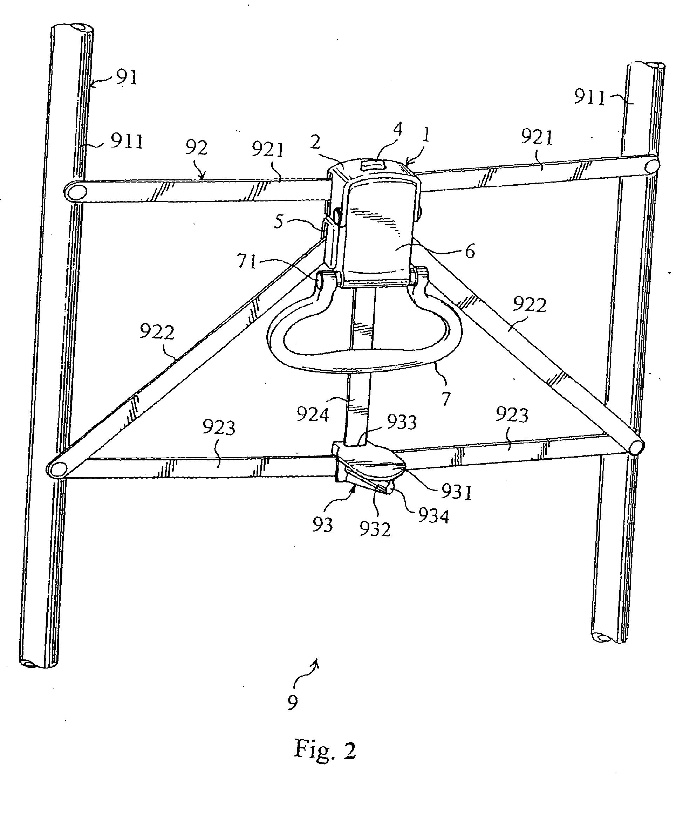

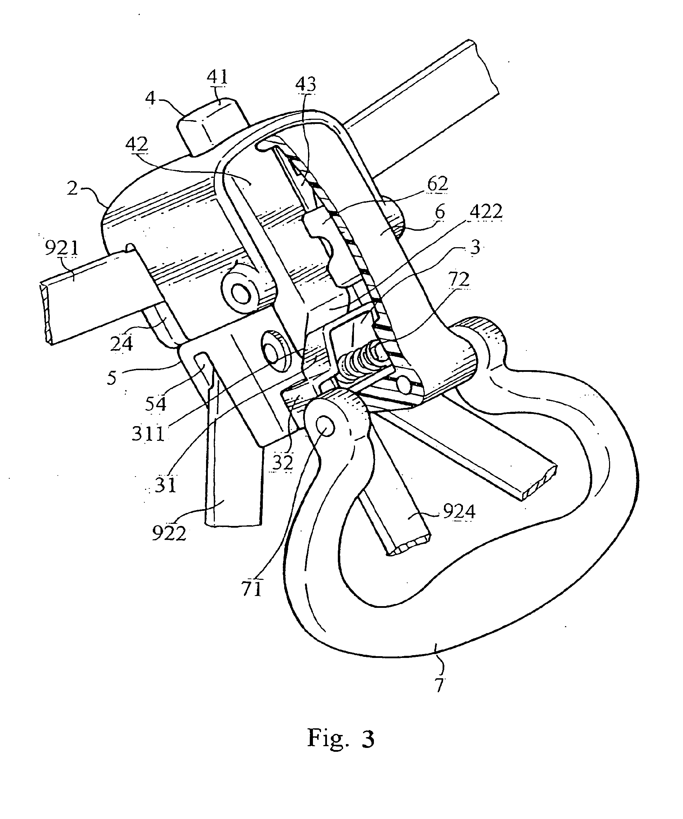

As shown in Figs. 2 and 3, a locking mechanism 1 for using together with a frame unit 9 comprises a rectangular base 2, a locking member 3, a releasing member 4, a rectangular slide 5, a cover-like pivoting member 6, and a handle 7.

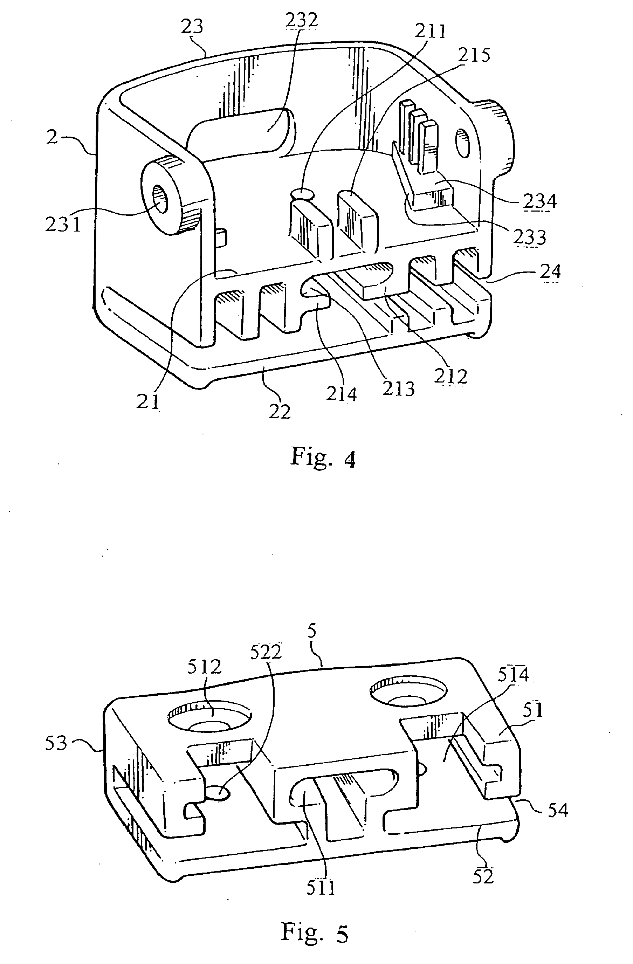

As shown in Fig. 4, the base 2 includes a first board 21, a second board 22 parallel to the first board 21, an U-shaped bridge board 23 connecting with the first board 21 and the second board 22, and a slot 24 defined by the first board 21 and the second board 22 and situated at three end surfaces of the first board 21 and the second board 22.

The first board 21 has an aperture 211 formed at the center thereof, a L-shaped rib 212 and a T-shaped rib 214 both on a surface of the first board 21 near the second board 22, a slit 213 defined by the two ribs 212 and 214, and two lugs 215 on another surface of the first board 21 opposite to the slit 213. The bridge board 23 has two aligned holes 231 respectively placed on the two opposite surfaces extending away from the first board 21, an opening 232 situated on the third surface of the bridge board 23, and two wedges 234 respectively situated at two opposed inner surfaces of the bridge board 23. The two wedges 234 respectively have an inclined surface 233. The two inclined surfaces 233 are spaced farther at the end near the opening 232 than the end away from the opening 232. The second board 22 has an eyelet (not shown) aligned with the aperture 211 of the first board 21.

As shown in Fig. 5, the slide 5 includes a first plate 51, a second plate 52 parallel to the first plate 51, a bridge plate 53 connecting the first plate 51 and the second plate 52, and a flute 54 defined by the first plate 51 and the second plate 52 and situated at three end surfaces of the first plate 51 and the second plate 52.

The first plate 51 has two grooves 514 respectively near two sides at lower end, two spot-faced holes 512 between the upper end and the two grooves 514, and a tunnel 511 between the two grooves 514. The second plate 52 has two bores 522 respectively aligned with the two spot-faced hole 512 of the first plate 51.

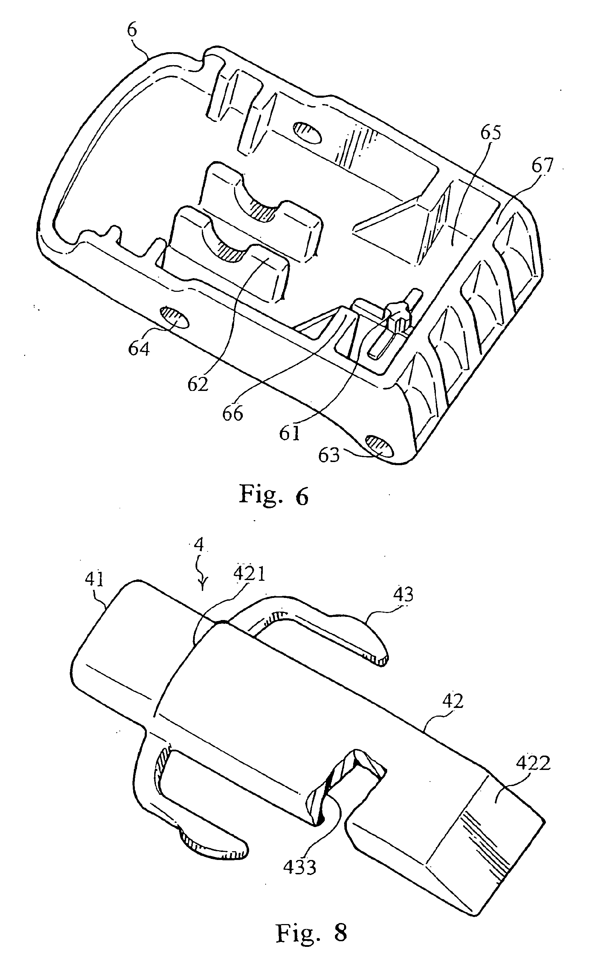

As shown in Fig. 6, the pivoting member 6 includes a cavity 65 defined by three sidewalls 67 and two spacers 66 thereof, a perforation 63 formed in and through one of sidewalls 67, a protrusion 61 situated at the center of the cavity 65, two protuberances 62 arranged near the central portion of the pivoting member 6, and two pivot holes 64 respectively provided near the middle parts of the other two sidewalls 67.

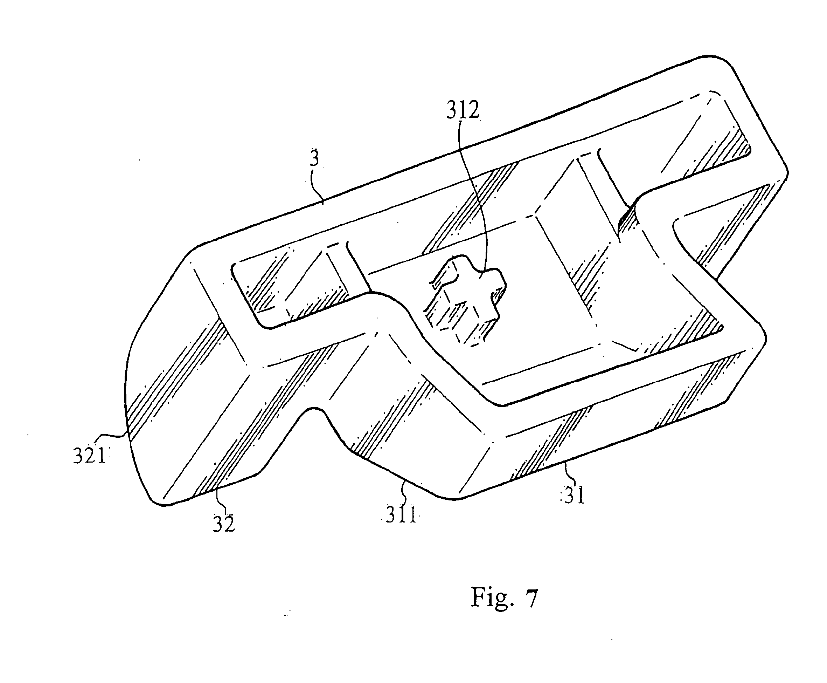

As shown in Fig. 7, the locking member 3 includes a retreating portion 31 at the middle part thereof, and two engaging portions 32 respectively extending oppositely from two sides of the retreating portion 31. Each engaging portion 32 has a camber 321 at a front lower end thereof. The retreating portion 31 has a slope 311 at front upper end thereof and a bump 312 on the rear surface thereof.

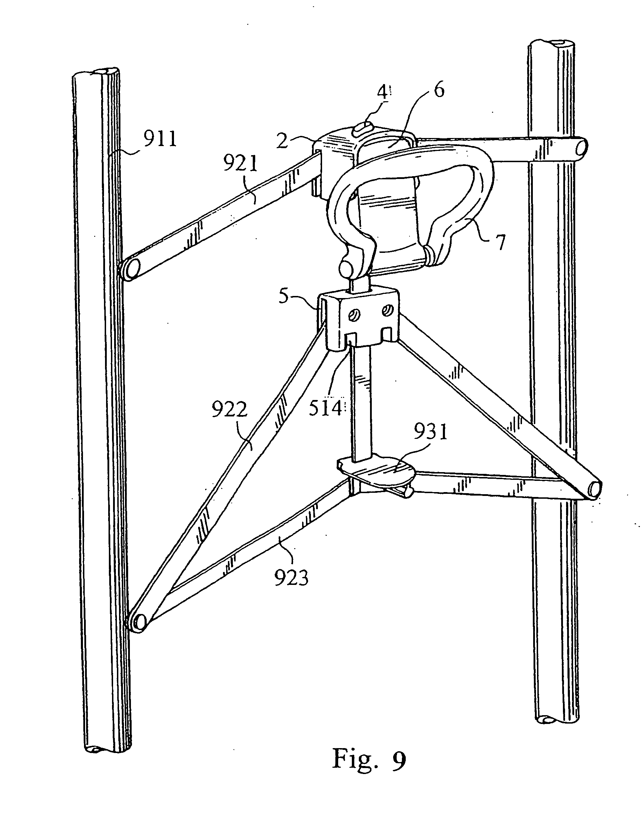

As shown in Fig. 8, the releasing member 4 includes a shorter head portion 41, a longer tail portion 42, and two L-shaped elastic arm portions 43 respectively extending perpendicularly from two sides of the junction between the head portion 41 and the tail portion 42. The tail portion 42 has a shoulder 421 at the junction between the head portion 41 and the tail portion 42, a slant 422 at the distal end of the tail portion 42, and a passage 433 defmed by the skirts of the tail portion 42.

### Assembling of the locking mechanism 1:

As shown in Figs. 2 and 3, first, the releasing member 4 partially penetrates the base 2 from the inner portion of the base 2 through the opening 232 thereof to the extent that only the head portion 41 of the releasing member 4 protrudes outside the base 2. In this case, the lugs 215 are accommodated in the passage 433 of the releasing member 4, the two elastic arm portions 43 of the releasing member 4 respectively abut against the inclined surfaces 233 of the two wedges 234 in the base 2, and the shoulder 421 of the releasing member 4 abuts against the bridge board 23 of the base 2.

A pin 71 is passed through two end holes of the handle 7 and the perforation 63 of the pivoting member 6 to pivotally connect the handle 7 to the pivoting member 6. Two ends of an elastic member 72 respectively bush around the protrusion 61 of the pivoting member 6 and the bump 312 of the locking member 3. Then the locking member 3 is mounted into the cavity 65 of the pivoting member 6. Subsequently, a rivet (not shown) penetrates the base 2 from the orifices 231 thereof and the pivoting member 6 from the pivotal holes 64, and simultaneously the two engaging portions 32 of the locking member 3 are respectively inserted into the two grooves 514 in the slide 5 so as to pivotally connect the subassembly composed by the pivoting member 6, handle 7, and locking member 3 to the base 2 in order to construct the locking mechanism 1 for a frame unit 9 according to the present invention.

### Other preferred embodiments of the locking mechanism 1:

The pivoting member 6, the elastic member 72, and the locking member 3 in the above preferred embodiment are all independent members which are separately manufactured. However, in another preferred embodiment, the elastic member 72 and the pivoting member 6 can be integrally formed as a new pivoting member with an elastic tag such as plastics. Alternatively, in a further preferred embodiment, the elastic member 72 and the locking member 3 can be integrally formed as a new locking member with an elastic tag such as plastics.

### Frame unit 9:

On the other hand, the frame unit 9 applied together with the locking mechanism 1 according to the present invention comprises a strut assembly 91, a rod assembly 92, and a pedal assembly 93.

The strut assembly 91 includes a plurality of struts 911, which are parallel to, inclined, or crossed each other to construct a stroller or a push-chair with a canopy (not shown), but only two struts 911 are shown in this embodiment.

The rod assembly 92 includes two first rods 921, two second rods 922, two third rods 923, and a guiding rod 924.

The pedal assembly 93 has a pedal body 931 and a collar 932 integrated with the pedal body 931. The pedal body 931 further has a recess 933 at the front end thereof and the collar 932 further has a howe 934 at the center thereof.

### Assembling of locking mechanism 1 and frame unit 9:

The two first rods 921 at one end thereof are respectively connected pivotally to the two struts 911 by a rivet. Another ends of the two first rods 921 are respectively inserted into the slot 24 from two sides of the base 2 and one end of the guiding rod 924 is inserted into the slit 213 of the base 2. Next, a rivet (not shown) is sequentially passed through the aperture 211 of the first board 21, the one end of the guiding rod 924, the another ends of the two first rods 921, and the eyelet of the second board 22, and then the members mentioned above are pivotally connected together.

One end of each of two second rods 922 is inserted into the flute 54 of the slide 5, and then a rivet (not shown) is sequentially passed through each spot-faced hole 512, each second rod 922, and each bore 522 of the slide 5 so as to pivotally connect each second rod 922 to the slide 5.

The another end of the guiding rod 924 is previously passed through the tunnel 511 of the slide 5 and the recess 933 of the pedal body 931, and then a rivet is sequentially passed through the howe 934 of the collar 932, the another end of the guiding rod 924, and one end of the each two third rods 923 in order to pivotally connect the pedal assembly 93, the guiding rod 924, and the third rods 923 together. Finally, the another ends of each the second rod 922 and each the third rod 923 are pivotally connected to each the strut 911 respectively by a rivet.

### Operating:

As shown in Figs. 2 and 3, when the slide 5 is situated at the upper end (upper dead point) of the guiding rod 924 and near the base 2, the rods 921, 922, and 923 are stretched, wherein the first rods 921 and the third rods 923 are substantially horizontal but a little bit of inclination down. By means of the arrangement of the rods 921, 922, and 923, the rod assembly 92 or even the entire frame unite 9 is sufficient to be automatically held at the stretched state. Furthermore, the elastic member 72 pushes the locking member 3 and one end, where the cavity 65 is provided, of the pivoting member 6 in opposite directions; however, the pivoting member 6 is unable to rotate because the protuberances 62 of the pivoting member 6 abut against the tail portion 42 of the releasing member 4; therefore, the engaging portions 32 of the locking member 3 are pushed into the grooves 514 of the slide 5 by the elastic member 72 to hold the slide 5 near the base 2, which can prevent the slide 5 from departing from the upper end point of the guiding rod 924 to unexpectedly fold the frame unit 9 (the rod assembly 92) when the frame unit 9 is suffered an incidental force.

Furthermore, because the elastic arm portions 43 of the releasing member 4 respectively abut against the inclined surfaces 233 of the wedges 234 in the base 2, each force exerted on the elastic arm portion 43 applied by the inclined surface 233 is analyzed into a component of force compressing the elastic arm portion 43 and another component of force pushing up the releasing member 4 so that the releasing member 4 is always maintain at the uppermost position and unable to automatically actuate the locking member 3 to change the locking state of the locking mechanism 1.

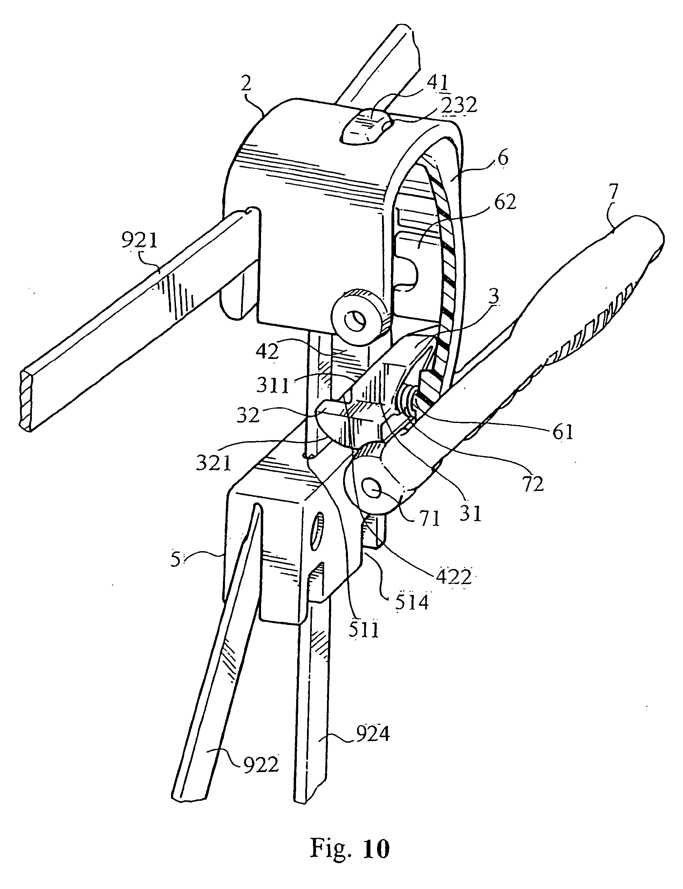

As shown in Figs. 9 and 10, when the frame unit 9 is desired to be folded, only the releasing member 4 has to be pressed down. Under guidance of the lugs 215 in the base 2, the slant 422 of the releasing member 4 is downwardly moved to press against the slope 311 of the locking member 3 and moreover to force the locking member 3 transversely moving to simultaneously compress the elastic member 72 to the extent that the engaging portions 32 of the locking member 3 are completely retreated from the grooves 514 of the slide 5 and thus the locking member 3 and the slide 5 are disengaged. In this case, if the handle 7 is lifted up, the slide 5 will downwardly move along the guiding rod 924 to fold the frame unit 9.

When the hand pressing on the releasing member 4 is removed, the releasing member 4 is recovered to the state prior to be pressed by the components of forces upwardly exerted on the elastic arm portions 43 applied by the inclined surfaces 233 of the wedges 234 in the base 2. When the slide 5 downwardly moves to beneath the locking member 3, the locking member 3 is pushed by the restoration force resulted from the elastic arm portion 43 to the extent that the retreating portion thereof abuts against the tail portion 42 or the guiding rod 924.

When the frame unit 9 is desired to be stretched again, the struts 911 may be oppositely pulled out each other by both hands in order to make the slide 5 upwardly move, if necessary, together with one foot stepping on the pedal assembly 93. Then the slide 5 passes by the camber 321 of the locking member 3 to the extent that the engaging portions 32 of the locking member 3 insert into the grooves 514 of the slide 5 again in order to allow the locking mechanism 1 holding the frame unit 9 at a stretched state.

This invention has been disclosed in terms of specific embodiments. It will be apparent that many modifications can be made to the disclosed structures without departing from the invention. Therefore, it is the intent of the appended claims to cover all such variations and modifications as come within the scope of this invention, as defined in the appended claims.

## Claims

1. A locking mechanism (1) for a frame unit (9) provided for connecting to the frame unit (9) which has at least a first rod (921) and at least a second rod (922), the locking mechanism (1) comprising: a base (2), a slide (5), a pivoting member (6), a locking member (3), and a releasing member (4), wherein:
the base (2) being pivotally connectable with at least the first rod (921) of the frame unit (9);
the slide (5) being pivotally connectable with at least the second rod (922) of the frame unit (9);
the pivoting member (6) being pivotally connected with the base (2);
**characterized in that :**
the locking member (3) having opposite two ends, one end being mounted to the pivoting member (6), another end being engaged to the slide (5) so as to keep the slide (5) adjacent to the base (2) and to hold at least the first rod (921 ) and at least the second rod (922) of the frame unit (9) at a stretched state;
the releasing member (4) being mounted to the base (2);
wherein when a force is exerted on the releasing member (4), the releasing member (4) actuates the locking member (3) to separate the locking member (3) from the slide (5) in order to allow the slide (5) moving relative to the base (2), which make the frame unit (9) in a foldable state.

2. The locking mechanism (1) for a frame unit (9) as claimed in claim 1, **characterized in that** the locking mechanism (1) further has an elastic member (72) situated between the pivoting member (6) and the locking member (3) for recovering the locking member (3).

3. The locking mechanism (1) for a frame unit (9) as claimed in claim 1 or 2, **characterized in that** the base (2) further has a lug (215) for guiding movement of the releasing member (4).

4. The locking mechanism (1) for a frame unit as claimed in any one of the preceding claims, **characterized in that** the releasing member (4) further has a slant (422) for abutting against a slope (311) of the locking member (3) to actuate the locking member (3).

5. The locking mechanism (1) for a frame unit (9) as claimed in any one of the preceding claims, **characterized in that** the releasing member (4) has at least an elastic arm portion (43) and the base (2) has at least an inclined surface (233) contacting with at least the elastic arm portion (43) to recover the releasing member (4).

6. The locking mechanism (1) for a frame unit (9) as claimed in any one of the preceding claims, **characterized in that** the base (2) has at least a slot (24) for accommodating at least the first rod (921).

7. The locking mechanism (1) for a frame unit (9) as claimed in any one of the preceding claims, **characterized in that** the slide (5) has at least a flute (54) for accommodating at least the second rod (922).

8. The locking mechanism (1) for a frame unit (9) as claimed in any one of the preceding claims, **characterized in that** the pivoting member (6) further has a protuberance (62) for abutting against the releasing member (4) to limit the pivoting member (6) from moving.

9. The locking mechanism (1) for a frame unit (9) as claimed in any one of the preceding claims, **characterized in that** the locking mechanism (1) further has a handle (7) pivotally connected to the pivoting member (6) for auxiliary folding the frame unit (9).

10. The locking mechanism (1) for a frame unit (9) as claimed in any one of the preceding claims, **characterized in that** the locking member (3) further has a camber (321) for the slide (5) to be easily recovered.

11. A frame unit (9) comprising a locking mechanism (1) as claimed in any one of the preceding claims, **characterized in that** the frame unit (9) further has a guiding rod (924) connected to the base (2) to guide the motion of the slide (5).

12. The frame unit (9) comprising a locking mechanism (1) as claimed in claim 11, **characterized in that** the base (2) has a slit (213) for accommodating the guiding rod (924).

13. The frame unit (9) comprising a locking mechanism (1) as claimed in claim 11 or claim 12, **characterized in that** the slide (5) has a tunnel (511) for accommodating the guiding rod (924).

14. The frame unit (9) comprising a locking mechanism (1) as claimed in any one of claims 11 to 13, **characterized in that** the frame unit (9) further comprises a pedal assembly (93) provided at one end of the guiding rod (924) to facilitate stretching of the frame unit (9).

15. The frame unit (9) comprising a locking mechanism (1) as claimed in any one of claims 11 to 14, **characterized in that** the frame unit (9) further comprises at least a third rod (923) to connect the guiding rod (924) and at least the second rod (922).

16. The frame unit (9) comprising a locking mechanism (1) as claimed in any one of claims 11 to 15, **characterized in that** the frame unit (9) further comprises a strut assembly (91, 911) connecting at least the first rod (921) and at least the second rod (922).

17. A stroller comprising a locking mechanism (1) or a frame unit (9) as claimed in any one of claims 1 to 16.

## Patentansprüche

1. Verrieglungsmechanismus (1) für eine Rahmeneinheit (9), welcher zum Verbinden mit der Rahmeneinheit (9) vorgesehen ist, welche mindestens einen ersten Stab (921) und mindestens einen zweiten Stab (922) aufweist, wobei der Verriegelungsmechanismus (1) umfasst: eine Basis (2), eine Führung (5), ein Schwenkelement (6), ein Verriegelungselement (3) und ein Entriegelungselement (4), wobei:
die Basis (2) mit zumindest dem ersten Stab (921) der Rahmeneinheit (9) schwenkbar verbindbar ist;
die Führung (5) mit zumindest dem zweiten Stab (922) der Rahmeneinheit (9) schwenkbar verbindbar ist;
das Schwenkelement (6) schwenkbar mit der Basis (2) verbunden ist;
**dadurch gekennzeichnet, dass**:
das Verriegelungselement (3) zwei gegenüberliegende Enden aufweist, wobei ein Ende an dem Schwenkelement (6) angebracht ist, wobei sich ein weiteres Ende in Eingriff mit der Führung (5) befindet, um die Führung (5) benachbart zu der Basis (2) zu halten, und um zumindest den ersten Stab (921) und zumindest den zweiten Stab (922) der Rahmeneinheit (9) in einem ausgestreckten Zustand zu halten;
das Entriegelungselement (4) an der Basis (2) angebracht ist; wobei, wenn eine Kraft auf das Entriegelungselement (4) ausgeübt wird, das Entrieglungselement (4) das Verriegelungselement (3) betätigt, um das Verriegelungselement (3) von der Führung (5) zu trennen, um zu ermöglichen, dass die Führung (5) sich relativ zu der Basis (2) bewegt, was die Rahmeneinheit (9) in einen faltbaren Zustand überführt.

2. Verrieglungsmechanismus (1) für eine Rahmeneinheit (9) nach Anspruch 1, **dadurch gekennzeichnet, dass** der Verriegelungsmechanismus (1) ferner ein elastisches Element (72) aufweist, welches zwischen dem Schwenkelement (6) und dem Verrieglungselement (3) zum Zurückstellen des Verriegelungselements (3) angeordnet ist.

3. Verrieglungsmechanismus (1) für eine Rahmeneinheit (9) nach Anspruch 1 oder 2, **dadurch gekennzeichnet, dass** die Basis (2) ferner einen Ansatz (215) zum Führen einer Bewegung des Entriegelungselements (4) aufweist.

4. Verrieglungsmechanismus (1) für eine Rahmeneinheit nach einem der vorhergehenden Ansprüche, **dadurch gekennzeichnet, dass** das Entriegelungselement (4) ferner eine Schräge (422) zum Aneinanderstoßen gegen eine Neigung (311) des Verriegelungselements (3) zum Betätigen des Verriegelungselements (3) aufweist.

5. Verrieglungsmechanismus (1) für eine Rahmeneinheit (9) nach einem der vorhergehenden Ansprüche, **dadurch gekennzeichnet, dass** das Entriegelungselement (4) zumindest einen elastischen Trägerabschnitt (43) aufweist und die Basis (2) zumindest eine geneigte Oberfläche (233), welche zumindest den elastischen Trägerabschnitt (43) berührt, aufweist, um das Entriegelungselement (4) wieder herzustellen.

6. Verrieglungsmechanismus (1) für eine Rahmeneinheit (9) nach einem der vorhergehenden Ansprüche, **dadurch gekennzeichnet, dass** die Basis (2) zumindest einen Schlitz (24) zum Aufnehmen zumindest des ersten Stabes (921) aufweist.

7. Verrieglungsmechanismus (1) für eine Rahmeneinheit (9) nach einem der vorhergehenden Ansprüche, **dadurch gekennzeichnet, dass** die Führung (5) zumindest eine Nut (54) zum Aufnehmen zumindest des zweiten Stabes (922) aufweist.

8. Verrieglungsmechanismus (1) für eine Rahmeneinheit (9) nach einem der vorhergehenden Ansprüche, **dadurch gekennzeichnet, dass** das Schwenkelement (6) ferner eine Ausstülpung (62) zum Anstoßen gegen das Entriegelungselement (4) aufweist, um eine Bewegung des Schwenkelements (6) zu beschränken.

9. Verrieglungsmechanismus (1) für eine Rahmeneinheit (9) nach einem der vorhergehenden Ansprüche, **dadurch gekennzeichnet, dass** der Verriegelungsmechanismus (1) ferner einen Griff (7) schwenkbar verbunden mit dem Schwenkelement (6) aufweist, um ein Falten der Rahmeneinheit (9) zu unterstützen.

10. Verrieglungsmechanismus (1) für eine Rahmeneinheit (9) nach einem der vorhergehenden Ansprüche, **dadurch gekennzeichnet, dass** das Verriegelungselement (3) ferner eine Krümmung (321) aufweist, um die Führung (5) einfach wieder herzustellen.

11. Rahmeneinheit (9) umfassend einen Verriegelungsmechanismus (1) nach einem der vorhergehenden Ansprüche, **dadurch gekennzeichnet, dass** die Rahmeneinheit (9) ferner einen Führungsstab (924) verbunden mit der Basis (2) aufweist, um die Bewegung der Führung (5) zu führen.

12. Rahmeneinheit (9) umfassend einen Verriegelungsmechanismus (1) nach Anspruch 11, **dadurch gekennzeichnet, dass** die Basis (2) einen Schlitz (213) zum Aufnehmen des Führungsstabs (924) aufweist.

13. Rahmeneinheit (9) umfassend einen Verriegelungsmechanismus (1) nach Anspruch 11 oder Anspruch 12, **dadurch gekennzeichnet, dass** die Führung (5) einen Tunnel (511) zum Aufnehmen des Führungsstabes (924) aufweist.

14. Rahmeneinheit (9) umfassend einen Verriegelungsmechanismus (1) nach einem der Ansprüche 11-13, **dadurch gekennzeichnet, dass** die Rahmeneinheit (9) ferner eine Fußhebelanordnung (93) umfasst, die an einem Ende des Führungsstabs (924) vorgesehen ist, um ein Strecken der Rahmeneinheit (9) zu erleichtern.

15. Rahmeneinheit (9) umfassend einen Verriegelungsmechanismus (1) nach einem der Ansprüche 11-14, **dadurch gekennzeichnet, dass** die Rahmeneinheit (9) ferner zumindest einen dritten Stab (923) umfasst, um den Führungsstab (924) und zumindest den zweiten Stab (922) zu verbinden.

16. Rahmeneinheit (9) umfassend einen Verriegelungsmechanismus (1) nach einem der Ansprüche 11-15, **dadurch gekennzeichnet, dass** die Rahmeneinheit (9) ferner eine Strebenanordnung (91, 911) umfasst, welche zumindest den ersten Stab (921) und zumindest den zweiten Stab (922) verbindet.

17. Kinderwagen, umfassend einen Verriegelungsmechanismus (1) oder eine Rahmeneinheit (9) nach einem der Ansprüche 1-16.

## Revendications

1. Mécanisme de verrouillage (1) pour une unité de cadre (9) fournie pour être reliée à l'unité de cadre (9) qui comporte au moins une première tige (921) et au moins une deuxième tige (922), le mécanisme de verrouillage (1) comprenant : une base (2), un coulisseau (5), un élément pivotant (6), un élément de verrouillage (3), et un élément de libération (4), dans lequel :
la base (2) étant reliable de façon pivotante à au moins la première tige (921) de l'unité de cadre (9) ;
le coulisseau (5) étant relié de façon pivotante à au moins la deuxième tige (922) de l'unité de cadre (9) ;
l'élément pivotant (6) étant relié de façon pivotante à la base (2) ;
**caractérisé en ce que** :
l'élément de verrouillage (3) comportant deux extrémités opposées, une extrémité étant montée sur l'élément pivotant (6), une extrémité étant en prise avec le coulisseau (5) afin de maintenir le coulisseau (5) à côté de la base (2) et de maintenir au moins la première tige (921) et au moins la deuxième tige (922) de l'unité de cadre (9) dans un état étiré ;
l'élément de libération (4) étant monté sur la base (2) ;
dans lequel lorsqu'une force est exercée sur l'élément de libération (4), l'élément de libération (4) actionne l'élément de verrouillage (3) pour séparer l'élément de verrouillage (3) à partir du coulisseau (5) afin de permettre au coulisseau (5) de se déplacer par rapport à la base (2), ce qui met l'unité de cadre (9) dans un état pliant.

2. Mécanisme de verrouillage (1) pour une unité de cadre (9) selon la revendication 1, **caractérisé en ce que** le mécanisme de verrouillage (1) comporte en outre un élément élastique (72) situé entre l'élément pivotant (6) et l'élément de verrouillage (3) pour récupérer l'élément de verrouillage (3).

3. Mécanisme de verrouillage (1) pour une unité de cadre (9) selon la revendication 1 ou 2, **caractérisé en ce que** la base (2) comporte en outre une patte (215) pour guider le mouvement de l'élément de libération (4).

4. Mécanisme de verrouillage (1) pour une unité de cadre selon l'une quelconque des revendications précédentes, **caractérisé en ce que** l'élément de libération (4) comporte en outre une inclinaison (422) pour prendre appui contre une pente (311) de l'élément de verrouillage (3) pour actionner l'élément de verrouillage (3).

5. Mécanisme de verrouillage (1) pour une unité de cadre (9) selon l'une quelconque des revendications précédentes, **caractérisé en ce que** l'élément de libération (4) comporte au moins une partie de bras élastique (43) et la base (2) comporte au moins une surface inclinée (233) entrant en contact avec au moins la partie de bras élastique (43) pour récupérer l'élément de libération (4).

6. Mécanisme de verrouillage (1) pour une unité de cadre (9) selon l'une quelconque des revendications précédentes, **caractérisé en ce que** la base (2) comporte au moins une fente (24) pour contenir au moins la première tige (921).

7. Mécanisme de verrouillage (1) pour une unité de cadre (9) selon l'une quelconque des revendications précédentes, **caractérisé en ce que** le coulisseau (5) comporte au moins une cannelure (54) pour contenir au moins la deuxième tige (922).

8. Mécanisme de verrouillage (1) pour une unité de cadre (9) selon l'une quelconque des revendications précédentes, **caractérisé en ce que** l'élément pivotant (6) comporte en outre une protubérance (62) pour prendre appui contre l'élément de libération (4) pour empêcher l'élément pivotant (6) de se déplacer.

9. Mécanisme de verrouillage (1) pour une unité de cadre (9) selon l'une quelconque des revendications précédentes, **caractérisé en ce que** le mécanisme de verrouillage (1) comporte en outre une poignée (7) reliée de façon pivotante à l'élément pivotant (6) pour le pliage auxiliaire de l'unité de cadre (9).

10. Mécanisme de verrouillage (1) pour une unité de cadre (9) selon l'une quelconque des revendications précédentes, **caractérisé en ce que** l'élément de verrouillage (3) comporte en outre une cambrure (321) pour que le coulisseau (5) soit facilement récupéré.

11. Unité de cadre (9) comprenant un mécanisme de verrouillage (1) selon l'une quelconque des revendications précédentes, **caractérisé en ce que** l'unité de cadre (9) comporte en outre une tige de guidage (924) reliée à la base (2) pour guider le mouvement du coulisseau (5).

12. Unité de cadre (9) comprenant un mécanisme de verrouillage (1) selon la revendication 11, **caractérisé en ce que** la base (2) comporte une fente (213) pour contenir la tige de guidage (929).

13. Unité de cadre (9) comprenant un mécanisme de verrouillage (1) selon la revendication 11 ou la revendication 12, **caractérisé en ce que** le coulisseau (5) comporte un tunnel (511) pour contenir la tige de guidage (924).

14. Unité de cadre (9) comprenant un mécanisme de verrouillage (1) selon l'une quelconque des revendications 11 à 13, **caractérisé en ce que** l'unité de cadre (9) comprend en outre un ensemble de pédale (93) fourni au niveau d'une extrémité de la tige de guidage (924) pour faciliter l'étirement de l'unité de cadre (9).

15. Unité de cadre (9) comprenant un mécanisme de verrouillage (1) selon l'une quelconque des revendications 11 à 14, **caractérisé en ce que** l'unité de cadre (9) comprend en outre au moins une troisième tige (923) pour relier la tige de guidage (924) et au moins la deuxième tige (922).

16. Unité de cadre (9) comprenant un mécanisme de verrouillage (1) selon l'une quelconque des revendications 11 à 15, **caractérisé en ce que** l'unité de cadre (9) comprend en outre un ensemble de montant (91, 911) reliant au moins la première tige (921) et au moins la deuxième tige (922).

17. Poussette comprenant un mécanisme de verrouillage (1) ou une unité de cadre (9) selon l'une quelconque des revendications 1 à 16.
